(19) **Europäisches Patentamt**

**European Patent Office**

**Office européen des brevets**

(11) **EP 1 136 826 A2**

(12) **EUROPÄISCHE PATENTANMELDUNG**

(43) Veröffentlichungstag:
26.09.2001 Patentblatt 2001/39

(51) Int Cl.⁷: $G01P\ 3/80$

(21) Anmeldenummer: 01106088.6

(22) Anmeldetag: 13.03.2001

| (84) Benannte Vertragsstaaten:<br>**AT BE CH CY DE DK ES FI FR GB GR IE IT LI LU**<br>**MC NL PT SE TR**<br>Benannte Erstreckungsstaaten:<br>**AL LT LV MK RO SI** | (72) Erfinder:<br>• **Theile, Horst**<br>  **42076 Aachen (DE)**<br>• **Wosnitza, Franz**<br>  **52080 Aachen (DE)**<br>• **Puttke, Bernhard**<br>  **91074 Herzogenaurach (DE)** |
| (30) Priorität: **20.03.2000 DE 10013512** | |
| (71) Anmelder: **IGL Ingenieur-Gemeinschaft Luftfahrt**<br>**GmbH**<br>**52068 Aachen (DE)** | (74) Vertreter: **Sparing - Röhl - Henseler**<br>**Patentanwälte**<br>**Rethelstrasse 123**<br>**40237 Düsseldorf (DE)** |

(54) **Einrichtung zur Geschwindigkeitsmessung**

(57) Die Erfindung betrifft eine Einrichtung zur Geschwindigkeitsmessung mit zwei in einem vorbestimmten Abstand (L) in einer Bewegungsrichtung eines Objektes zueinander und zur Oberfläche (1) des Objektes beabstandet angeordneten Sensoren (2), die Signale an eine Auswerteeinrichtung mit zwei Eingangskanälen abgeben, wobei die Auswerteeinrichtung ein die an seinen Eingangskanälen auftretenden Signale digitalisierender Laufzeitkorrelator (6) ist, der einen geschlossenen Regelkreis zur Bestimmung der zeitlichen Verschiebung (T) der von den Sensoren (2) abgegebenen Signale bildet, wobei der Regelkreis einen Phasendetektor (7) zum Vergleich der zeitlichen Verschiebung von Eingangsignalen, einen Regler (8) und einen Verstellkreis für die vom Regler (8) zu regelnde Regelgröße aufweist, wobei der Laufzeitkorrelator (6) ein Schieberegister mit konstanter Länge und variabler Taktfrequenz aufweist, wobei durch den Phasendetektor (7) ein Phasenvergleich der Augenblickswerte der digitalisierten Signale der beiden Sensoren (2), von denen eines vom Regler (8) verzögert wird, vornehmbar ist, wobei die Taktfrequenz des Schieberegisters durch den Regler (8) entsprechend der Verzögerung, aus der sich die Geschwindigkeit ergibt, einstellbar.

Fig.2

EP 1 136 826 A2

## Beschreibung

Die Erfindung betrifft eine Einrichtung zur Geschwindigkeitsmessung nach dein Oberbegriff des Anspruchs 1.

Die Erfassung der Geschwindigkeit und die Analyse von Bewegungsvorgängen ist in vielen Bereichen der Industrie ein unverzichtbarer Bestandteil der Prozesskontrolle, der Prozessoptimierung und der Steuerung von produktionskritischen Vorgängen. Die Bestimmung von Geschwindigkeiten erfolgt häufig indirekt über die Messung der Drehzahl oder anderer an die Geschwindigkeit gekoppelter Größen mittels optischer oder magnetischer Impulsgeber. Die oftmals eingeschränkte Zugänglichkeit der bewegten Teile sowie der Meßfehler infolge von Schlupf und Verschleiß erlauben in einer Vielzahl von Fällen nicht mehr den Einsatz mechanisch gekoppelter Meßsysteme, sondern erfordern ein Verfahren zur berührungslosen Messung der Geschwindigkeit. Ein einfaches Verfahren hierzu ist die Messung der Laufzeit eines Objektes, dessen Geschwindigkeit bestimmt werden soll, zwischen zwei wohldefinierten Punkten, z.B. zwischen zwei hintereinander angeordneter Lichtschranken.

Es gibt jedoch eine wachsende Anzahl von industriellen und kommerziellen Applikationen, bei denen diese Verfahren so nicht benutzt werden können. Beispiele hierfür sind

- laufende Bänder aus Blech, Papier etc. mit empfindlichen Oberflächen,
- mittels Rüttelförderer bewegte Schüttgüter,
- Fahrzeuge mit großem Schlupf, z.B. im Gokartsport oder Traktoren,
- Fahrzeuge mit Anti-Schlupf-Regelung
- strömende Flüssigkeiten, offene Gerinne,
- Ermittlung der Streckung von Walzgütern durch Geschwindigkeitsmessung vor und hinter dem Walzgerüst.

Aus US-A-4 912 519 ist eine Einrichtung zur Geschwindigkeitsmessung bekannt, bei der zwei Sensoren vorgesehen sind, die in einem vorbestimmten Abstand in einer Bewegungsrichtung eines Objektes zueinander und zur Oberfläche des Objektes beabstandet angeordnet sind. Die Signale der beiden Sensoren werden in einem Laufzeitkorrelator mit zwei Eingangskanälen ausgewertet, der die Eingangssignale digitalisiert und einen geschlossenen Regelkreis zur Bestimmung der zeitlichen Verschiebung von Eingangssignalen bildet. Hierbei erfolgt die Steuerung des Laufzeitkorrelators über Kreuzkorrelationskoeffizienten, wobei die Verzögerung zur Koinzidenzbestimmung über zwei Schieberegister vorgenommen wird, deren Taktfrequenz variabel ist, um ein Maximum der Kreuzkorrelationsfunktion zu bestimmen. Hierzu wird eine zeitliche Quantisierung vorgenommen und festgestellt, wie oft eine Übereinstimmung von Augenblickswerten auftritt. Je weiter das Maximum der Kreuzkorrelationsfunktion vom momentan betrachteten Bereich entfernt ist, desto schlechter funktioniert diese Methode, da dementsprechend das zu betrachtende Fenster verschoben werden muß. Deshalb kann diese Binärsignalkorrelation nach dem Laufzeitverfahren bei kleinen Geschwindigkeiten nur geringen Beschleunigungen folgen. Bei hohen Geschwindigkeiten neigen sie zu Fehlmessungen, abgesehen davon, daß eine derartige Einrichtung einen relativ hohen Hardware-Aufwand erfordert.

Aus DE-A-4 225 842 ist eine Einrichtung zur Geschwindigkeitsmessung von Textilfäden an einer Wickeleinrichtung bekannt, bei der ebenfalls eine Laufzeitkorrelatorschaltung verwendet wird, wobei versucht wird, das Problem der Geschwindigkeitsabhängigkeit des Meßfehlers dadurch in den Griff zu bekommen, daß eine Regelverstellung durch ein zusätzliches externes Signal vorgenommen wird, um eine Bereichsvorgabe für das Einrasten des Regelkreises auf das richtige Totzeitmaximum zu liefern.

Aufgabe der Erfindung ist es, eine Einrichtung zur Geschwindigkeitsmessung nach dem Oberbegriff des Anspruchs 1 zu schaffen, mit der die momentane Geschwindigkeit berührungsfrei gegenüber einer beliebigen Oberfläche in Echtzeit über einen sehr großen Geschwindigkeitsbereich mit großer Genauigkeit gemessen werden kann, ohne daß Fehlmessungen auftreten.

Diese Aufgabe wird entsprechend dem kennzeichnenden Teil des Anspruchs 1 gelöst.

Hierbei wird durch einen Phasendetektor ein Phasenvergleich der Augenblickswerte der digitalisierten Signale von zwei Sensoren, von denen eines von einem ein Schieberegister mit variabler Taktfrequenz aufweisenden Regler verzögert wird, vorgenommen, wobei die Taktfrequenz des Schieberegisters durch den Regler entsprechend der Verzögerung, aus der sich die Geschwindigkeit ergibt, einstellbar ist. Die Taktfrequenz bestimmt hierbei die Pulsdauer der Regelabweichung und wird so eingestellt, daß die digitalisierten Signale der beiden Sensoren nicht mehr verschieden sind, d.h. der Regler stellt die Taktfrequenz ein, um eine entsprechende Signalverzögerung zu bewirken. Unverzögertes und verzögertes Signal werden dann miteinander phasenmäßig verglichen, d.h. die Flanken werden ausgewertet, d. h. der jeweilige Zustandswechsel festgestellt. Somit wird die Richtung der Regelabweichung und die Geschwindigkeit über die Impulsdauer der Signale kodiert. Dementsprechend erfolgt ein Ereignisvergleich im Gegensatz zur Bestimmung eines Maximums einer Kreuzkorrelationsfunktion.

Besonderns vorteilhaft und einfach läßt sich der Laufzeitkorrelator mit einem konfigurierbaren FPGA realisieren.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

Fig. 1 zeigt schematisch das erfindungsgemäße Meßprinzip.

Fig. 2 zeigt typische Signale, wie sie von Sensoren einer erfindungsgemäßen Einrichtung zur Geschwindigkeitsmessung aufgenommen werden.

Fig. 3 zeigt ein Blockschaltbild eines Laufzeitkorrelators für eine erfindungsgemäße Einrichtung zur Geschwindigkeitsmessung.

Fig. 4 zeigt die Umwandlung eines analogen Signals S(t) in ein Binärsignal B(t) durch den Laufzeitkorrelator von Fig. 3.

Fig. 5 zeigt eine Ausführungsform von Fig. 3.

Fig. 6 illustriert den Laufzeitunterschied zwischen zwei Binärsignalen.

Fig. 7 illustriert die Änderung der Stellgröße.

Fig. 8 zeigt schematisch ein Beispiel einer Signalerfassung.

Fig. 9 zeigt schematisch als Blockschaltbild eine Einrichtung zur Geschwindigkeits-/Drehzahlregelung.

Fig. 10 zeigt schematisch als Blockschaltbild eine Einrichtung zur Drehzahlmessung.

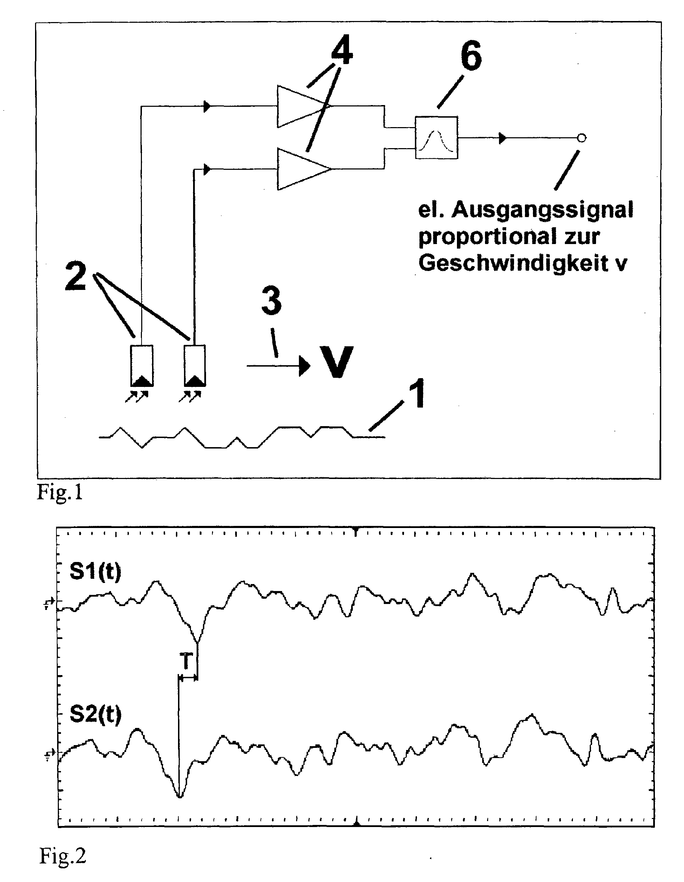

Wie in Fig. 1 dargestellt, wird eine Oberfläche 1 eines sich mit einer Relativgeschwindigkeit $v$ bewegenden Objektes mittels zweier geeigneter Sensoren 2 an zwei Stellen, die in Bewegungsrichtung gemäß Pfeil 3 in einem definierten Abstand L hintereinander liegen, abgetastet. Bei den durch die Sensoren 2 erzeugten Signalen handelt es sich um stochastische Signale. Diese Signale sind ähnlich, im Idealfall identisch, jedoch um die Laufzeit T gegeneinander verschoben, vgl. Fig. 2. Aus der Laufzeit T läßt sich die Geschwindigkeit bei bekanntem Abstand L der durch die Sensoren abgetasteten Stellen berechnen:

$$v = \frac{L}{T}.$$

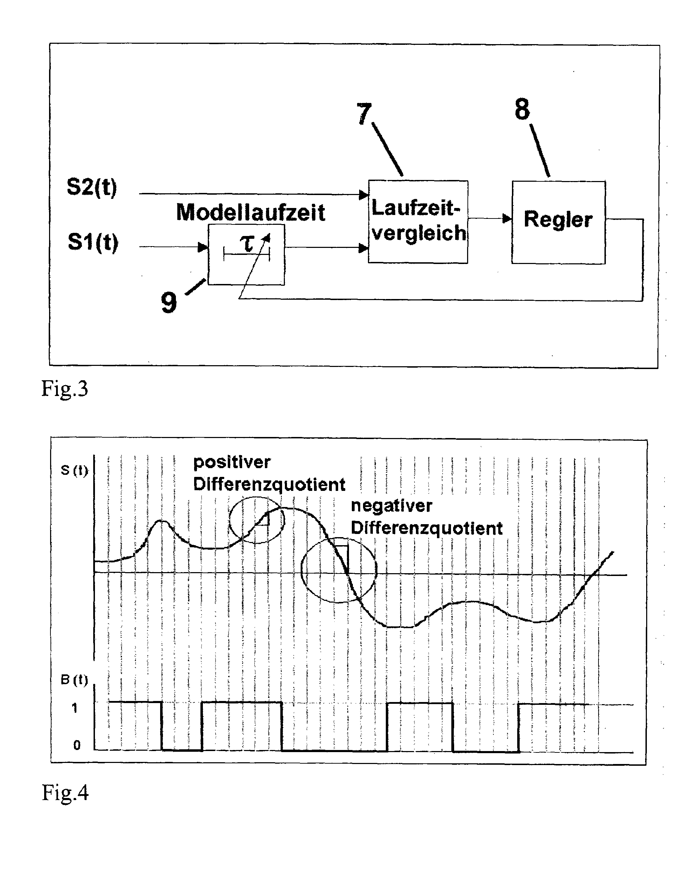

Dazu sind die Sensoren 2 über Signalverstärker 4 mit einer Auswerteeinrichtung in Form eines Laufzeitkorrelators 6 verbunden, der einen geschlossenen Regelkreis zur Bestimmung der zeitlichen Verschiebung der von den Sensoren 2 abgegebenen Signalen bildet. Der Laufzeitkorrelator 6 umfaßt, wie in Fig. 3 dargestellt ist, eine Einrichtung 7 zum Vergleichen der Laufzeiten von angelegten Signalen, einen Regler 8 und eine Einrichtung 9 zum Verstellen einer vom Regler 8 zu regelnden Größe. Bei der Laufzeitkorrelation wird die zeitliche Verschiebung T der empfangenen Signale $s_1(t)$ und $s_2(t)$ mittels des geschlossenen Regelkreises bestimmt. Im Idealfall bei maximaler Ähnlichkeit ist dann $s_2(t) = s_1(t - T)$.

Das Systemverhalten zwischen zwei Empfängern wird als Transportprozess mit einer Laufzeit T betrachtet. Diese Laufzeit T wird innerhalb des Laufzeitkorrelators 6 mit einer Modellaufzeit $\tau$ als Regelgröße verglichen. Diese Modellaufzeit $\tau$ wird derart verändert und nachgeführt, daß die Differenz der Signale

$$e(t) = s_2(t) - s_1(t - \tau)$$

im quadratischen Sinne ein Minimum annimmt, d.h.

$$E\{(s_2(t) - s_1(t - \tau))^2\} = \text{Min.}$$

Die notwendige Bedingung für ein Minimum lautet

$$\frac{d}{d\tau} E\left\{(s_2(t) - s_1(t - \tau))^2\right\} = -2E\left\{(s_2(t) - s_1(t - \tau)) * \frac{d}{d\tau} s_1(t - \tau)\right\} = 0.$$

Da die Verteilungsdichtefunktionen von $s_1(t)$ und $s_2(t)$ unbekannt sind, wird hier der Mittelwert als Schätzwert für den Erwartungswert verwendet. Unter dieser Randbedingung ist es dann ausreichend, nur die Ableitung der Korrelationsfunktion in einem Punkt an der Modellaufzeit $\tau$ zu berechnen. An der gesuchten Stelle T ist ein Nulldurchgang vorhanden. Rechts und links von diesem Nulldurchgang besitzt der Mittelwert unterschiedliche Vorzeichen. Das Verhalten des Mittelwerts entspricht also dem einer Regelabweichung innerhalb eines normalen Regelkreises. Somit kann ein einfacher Regelkreis für τ aufgebaut werden. Bei Abgleich des Regelkreises ist τ = T, und die Ausgangsgröße des Reglers stellt ein direktes Maß für die gesuchte Laufzeit dar.

Ein Vorteil des Laufzeitkorrelationsverfahrens im Gegensatz zur Kreuzkorrelation ist der deutlich verminderte Rechenaufwand. Eine hardwaremäßige Realisierung eines Laufzeitkorrelators 6 wird dadurch wesentlich begünstigt, so dass eine Online- und Realtime-Auswertung ermöglicht wird.

Eine zusätzliche Vereinfachung der technischen Realisierung des Laufzeitkorrelators 6 wird durch Quantisierung der Signale auf 1 Bit erreicht. Es werden also Binärsignale, d.h. nur die beiden möglichen Signalzustände "0" und "1", zur Korrelationsanalyse verwendet.

Übliche Codierungsverfahren benutzen einfache Komparatorschaltungen und erzeugen ein binäres Ausgangssignal in Abhängigkeit der Polarität des Augenblickwertes des analogen Eingangsignals. Man spricht deshalb hier auch von der Polaritätskorrelation. Bei dieser technischen Realisierung, dem sogenannten "Clipping", geht jedoch ein Teil der in den Signalen $s_1(t)$ und $s_2(t)$ enthaltenen Information verloren, wodurch sich die zur Verfügung stehende Informationsdichte erheblich verringert, so daß zur Erhöhung der Informationsdichte beispielsweise aufwendige Interferenzverfahren, in denen Informationen über die Phasenbeziehung der Signale zusätzlich ausgewertet werden, vorgeschaltet werden.

Bei der Digitalisierung der Signale im Laufzeitkorrelator 6 wird bevorzugt eine elektronische Schaltung verwendet, die das Vorzeichen des Differenzenquotienten des analogen Eingangsignals codiert, vgl. Fig. 4, die diese Transformation von der analogen Funktion S(t) zur binären Funktion B(t) veranschaulicht. Hierbei bedeutet eine logische ‚1' ein ansteigendes Signal und eine logische ‚0' ein abfallendes Signal. Diese Codierung hat einen wesentlich erhöhten Informationsgehalt der Binärsignale zur Folge. Hierdurch ergeben sich zum einen bei der Aufbereitung der Eingangssignale und damit bei der notwendigen technischen Ausrüstung wesentlich geringere Anforderungen, und zum anderen verbessert sich insbesondere bei der Analyse langsamerer Bewegungsvorgänge das dynamische Verhalten des Laufzeitkorrelators 6.

Durch den Einsatz von Sample-and-Hold-Schaltkreisen (nicht dargestellt) zur Erzeugung des Differenzenquotienten, mit einem oder mehreren Sample-and-Hold-Schaltkreisen pro Eingangskanal, kann man einen hohen Gleichlauf beider Kanäle des Laufzeitkorrelators 6 gewährleisten. Eine zusätzliche Unähnlichkeit der beiden Binärsignale, wie sie beim Einsatz von Differenziergliedern durch Streuung der Bauteilwerte auftritt, wird hierdurch vermieden.

Der Laufzeitkorrelator 6 ist mittels eines FIELD-PROGRAMABLE-GATE-ARRAY (FPGA) realisiert, so daß eine hochintegrierte und flexible Auswerteeinheit vorliegt. Programmierbare Logikbausteine wie FPGAs bieten die Möglichkeit zur Realisierung von digitalen Schaltungen bei hoher Integrationsdichte und einem hohen Maß an Flexibilität. Es sind derzeit FPGAs verfügbar, welche Schaltungen bis zu einer Million Logikgattern aufweisen können. Gleichzeitig wird durch diese Architektur die Umsetzung in eine Serienproduktion mit großen Stückzahlen und der Einsatz von ASICs sehr erleichtert und die spätere ASIC-Entwicklung kann wesentlich schneller und kostengünstiger erfolgen.

Die Schaltung im Inneren eines FPGAs entsteht durch Programmierung von Verbindungen zwischen einzelnen Logikzellen und Ein-/Ausgabezellen. Ein FPGA kann beliebig oft programmiert werden, so daß immer wieder neue Schaltungen implementiert werden können.

Im vorliegenden Fall bedeutet dies, daß Änderungen der Systemeigenschaften durch Umprogrammieren des FPGAs vorgenommen werden können. Die eigentliche Hardware bleibt dabei unberührt. D.h. es sind weder Platinenlayout noch Bestückung der zugehörigen Platine zu verändern.

Hierdurch wird es möglich, einen konfigurierbaren Laufzeitkorrelator 6 als abgeschlossenes binäres System zu realisieren. Dieses verfügt in seiner Minimalkonfiguration über zwei binäre Eingänge zum Einspeisen der Sensorsignale und einem binären Ausgang zur Ausgabe des Meßergebnisses. Zur Ausgabe kann ein frequenzcodiertes Signal erzeugt werden, dessen Ausgabefrequenz sich proportional zur gemessenen Geschwindigkeit verhält. Jeder Flankenwechsel des Ausgabesignals entspricht somit einem festgelegten Wegstück, so daß durch Zählen der Flankenwechsel mittels eines nachgeschalteten Zählers auch zusätzlich eine Längenmessung auf einfache Weise verwirklicht werden kann.

Zum Vergleich der beiden Signallaufzeiten, d.h. der zeitlichen Verschiebung T der empfangenen Signale, wird zweckmäßigerweise ein Phasendetektor 7 verwendet, wie man ihn z.B. von PLL-Schaltungen kennt. Das Ausgangssignal des Phasendetektors 7 wird als Maß für die Regelabweichung zur Ansteuerung des nachgeschalteten Reglers 8 benutzt. Neben einer Vereinfachung der Schaltung wird durch den Einsatz eines Phasendetektors 7 ein verbessertes dynamisches Verhalten des Laufzeitkorrelators 6 erreicht.

Der Regler 8 im Laufzeitkorrelator 6 hat die Aufgabe, die Modellaufzeit so einzustellen, daß der Laufzeitunterschied der beiden Signale am Eingang des Phasendetektors 7 Null beträgt. Damit der Laufzeitkorrelator 6 auch schnellen Geschwindigkeitsänderungen folgen kann, muß der Regler 8 dies in einer möglichst kurzen Zeit schaffen. Dies wird erreicht, indem infolge des Einsatzes der flexiblen elektronischen Schaltung mit FPGA die Struktur und die Parameter des Reglers 8 in einem weiten Bereich optimal für die jeweilige Meßaufgabe gewählt werden können.

Der Regler 8 stellt an seinem Ausgang ein amplitudenquantisiertes Stellsignal mit hinreichender digitaler Auflösung zur Verfügung. Dieses Signal repräsentiert im geschlossenen Regelkreis des Laufzeitkorrelators 6 die Stellgröße und verhält sich proportional zur gemessen Geschwindigkeit.

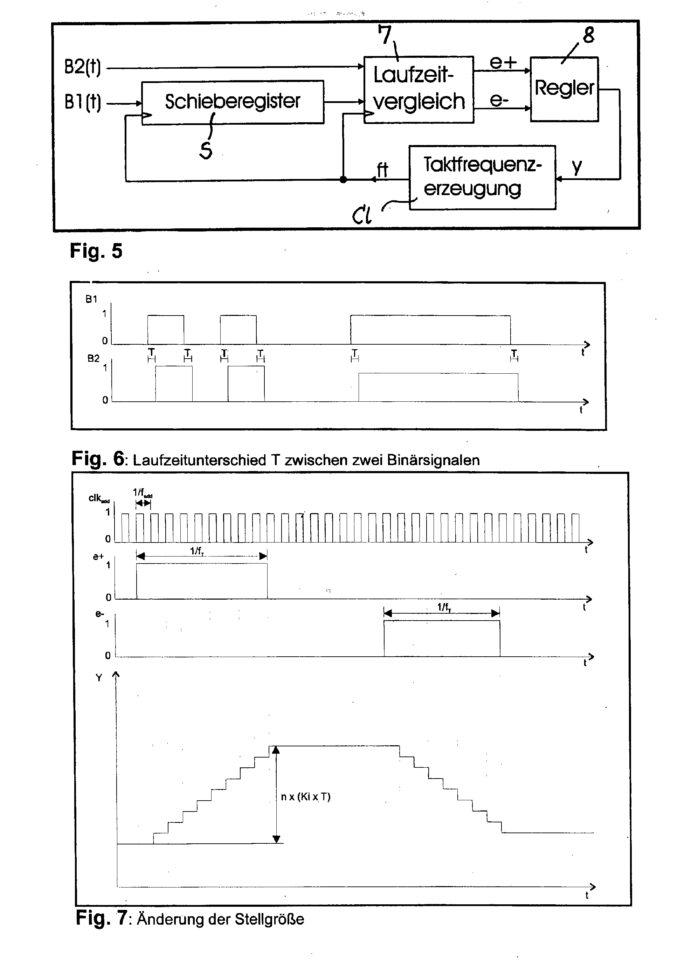

Zur Erzeugung der Modellaufzeit kann ein Schieberegister S verwendet werden, vgl. Fig. 5. Hierbei gibt es grundsätzlich zwei Möglichkeiten, die Laufzeit einzustellen.

Zum einen kann bei einer konstanten Taktfrequenz die Anzahl der Schieberegisterstufen verändert werden. In diesem Fall ist die Modellaufzeit stets ein Vielfaches der Periodendauer der Taktfrequenz. Diese Methode bietet sich für Korrelatoren auf Mikroprozessorbasis an, da sie softwaremäßig leicht umzusetzen ist.

Die andere, bei einem rein auf Hardware basierenden Laufzeitkorrelator 6 bevorzugte Möglichkeit zum Einstellen der Modellaufzeit $\tau$ ist eine Veränderung der Taktfrequenz bei konstanter Schieberegisterlänge. Zur Taktfrequenzerzeugung wird dabei ein Taktfrequenzerzeuger CI bevorzugt, der das DDFS (direct digital frequency synthesis) -Verfahren verwendet, welches eine zum digitalen Eingangssignal lineare Frequenz erzeugt. Als digitales Eingangssignal wird dann das Ausgangssignal des Reglers 8 verwendet.

Eine Besonderheit liegt darin, daß die variable Taktfrequenz des Schieberegisters S gleichzeitig zum Takten des Reglers 8 verwendet wird. Da nunmehr die Taktfrequenz geschwindigkeitsabhängig ist, verändern sich die Reglerparameter automatisch mit der Änderung der gemessenen Geschwindigkeit. Damit paßt sich das dynamische Verhalten des Laufzeitkorrelators 6 selbständig an die Dynamik der untersuchten Geschwindigkeit an.

Die Bandbreite der von den Sensoren 2 erzeugten digitalisierten Signale ist abhängig von der Größe der abgetasteten Flächen und der Geschwindigkeit v. Bei kleinen Geschwindigkeiten nimmt die Bandbreite der Signale ab. Bei Stillstand v = 0 geht der Wechselanteil der Signale gegen Null. Dies bedeutet für den Laufzeitkorrelator 6, daß die Häufigkeit der Binärsignalflanken bei kleinen Geschwindigkeiten geringer als bei hohen Geschwindigkeiten ist.

Bei einem Laufzeitkorrelator mit geschlossenem Regelkreis muß ein Signal für die Regelabweichung, welches dem Laufzeitunterschied der beiden Binärsignale B1 und B2 entspricht, erzeugt werden. Da Binärsignale nur die beiden Zustände 0' und ,1' besitzen, kann ein Laufzeitunterschied zwischen zwei Binärsignale durch "Betrachtung" der Zustandswechsel erfolgen. Fig. 6 verdeutlicht diesen Sachverhalt.

Damit ein Regler seine Ausgangsgröße, die Stellgröße y ändern kann, benötigt er an seinem Eingang ein von Null abweichendes Eingangssignal, die Regelabweichung e. Hieraus folgt unmittelbar, daß bei kleinen Geschwindigkeiten der Regler weniger häufig die Stellgröße und damit auch den Meßwert für die Geschwindigkeit ändern kann.

Vorausgesetzt die Regelabweichung wäre ein direktes Maß für den Laufzeitunterschied e ≈ T, dann wäre die Folge, daß lediglich die Meßrate mit der Geschwindigkeit abnehmen würde. Da jedoch schaltungstechnisch realisierbare Schaltungen zur Erzeugung der Regelabweichung e lediglich das Vorzeichen von e ermitteln können, besteht hier die Gefahr, daß der Laufzeitkorrelator 6 bei kleiner Geschwindigkeit raschen Geschwindigkeitsänderungen nicht mehr folgen kann.

Benutzt man zur Beschreibung des daraus resultierenden Verhaltens des Laufzeitkorrelators die Kreuzkorrelationsfunktion als Denkmodell, so kommt man zu dem Schluß, daß nun die Gefahr besteht, daß der Laufzeitkorrelator auf ein Nebenmaximum der Kreuzkorrelationsfunktion "einrastet". Dies kann auch bei hohen Geschwindigkeiten passieren, wenn der Regler so eingestellt wurde, daß er bei kleinen Geschwindigkeiten Beschleunigungen gut folgen kann.

Deshalb wird neben dem Vorzeichen auch die aktuell gemessene Geschwindigkeit im Signal der Regelabweichung zur Kodierung verwendet, um damit die Einstellung des Reglers (die Reglerparameter) geschwindigkeitsabhängig zu machen. Diese Lösung ermöglicht es, bei äußerst geringem schaltungstechnischen Mehraufwand das zuvor beschriebene Problem zu beseitigen und schränkt eine vielseitige Verwendung des Laufzeitkorrelators nicht ein, da keine zusätzlichen Signalgeber benötigt werden.

Nachfolgend wird beispielhaft die Verwendung eines digitalen Integrators als Regler beschrieben. Ein solcher Regler wird bekanntlich durch die Differenzengleichung

$$y_k = y_{k-1} + e_{k-1} \cdot (K_i \cdot T)$$

beschrieben. Hierbei entspricht $y_k$ der neu zu berechnenden Stellgröße, $y_{k-1}$ der aktuellen Stellgröße, $e_{k-1}$ der aktuellen Regelabweichung, $K_i$ der Integrationskonstanten und T der Periodendauer der Taktfrequenz.

Würde nun eine zeitliche Verschiebung der beiden Binärsignale detektiert und nur das Vorzeichen der Regelabweichung codiert, so würde $e_{k-1}$ für die Dauer T den Wert 1 oder -1 annehmen. Hieraus ergibt sich eine Änderung der Stellgröße von $|\Delta y| = K_i \cdot T$.

Vorliegend wird aber die Regelabweichung mit den beiden Bits e+ und ecodiert. Dabei kommen folgende Regeln zur Anwendung:

- Das Bit e- wird gesetzt, wenn die Modellaufzeit $\tau$ zu klein eingestellt ist.
- Das Bit e+ wird gesetzt, wenn die Modellaufzeit $\tau$ zu groß eingestellt ist.
- Beide Bits bleiben für die Dauer einer Periode der Schieberegistertaktfrequenz $f_T$ gesetzt und werden zurückgesetzt, wenn die Setzbedingung nicht mehr erfüllt ist.

Da sich $f_T$ proportional zur Geschwindigkeit v verhält $f_T = \frac{v}{K_v}$, ergibt sich durch diese Art der Codierung für e+ und e- eine geschwindigkeitsabhängige Pulsdauer $T_p$.

$$T_p = \approx \frac{1}{f_T} \approx \frac{1}{v}$$

Wird jetzt die Addition im I-Regler mit einer wesentlich höheren konstanten Frequenz $f_{add}$ getaktet, so werden genau $n = \approx \frac{f_{add}}{f_T} \approx \frac{1}{v}$ Additionen während der Dauer einer Pulsdauer $T_P$ ausgeführt, d. h. die Stellgröße ändert sich um

$$|\Delta y| = n \cdot (K_i \cdot T) \approx \frac{1}{v}.$$

Vergleiche hierzu Fig. 7.

Hiermit ändert sich die Stellgröße bei kleinen Geschwindigkeiten wesentlich stärker als bei hohen Geschwindigkeiten und der Einfluß der abnehmenden Flankenhäufigkeit wird kompensiert.

Der Ausdruck $n \cdot K_i = \frac{f_{add}}{f_T} \cdot K_i$ läßt sich unter Verwendung von $v = K_v \cdot f_T$ zu einer neuen geschwindigkeitsabhängigen Integrationskonstante

$$\boxed{K_i'(v) = K_i \cdot K_v \cdot f_{add} \cdot \frac{1}{v}}$$

zusammenfassen.

Die Praxis zeigt eindeutig, daß derart arbeitende Laufzeitkorrelatoren 6 über den gesamten Meßbereich besser Beschleunigungen folgen können und präzisere Meßergebnisse liefern als Laufzeitkorrelatoren mit konstanten Reglerparametern.

Da intern im FPGA des Laufzeitkorrelators 6 neben dem binären Ausgangssignal auch ein digitales Signal als Maß für die gemessene Laufzeit zur Verfügung steht, können leicht zusätzliche Schaltungsteile mit ins FPGA implementiert werden. Dadurch kann der Laufzeitkorrelator 6 optimal für den jeweiligen Verwendungszweck angepaßt werden. Hier einige Beispiele:

Digitale Schnittstelle zur Ausgabe der Stellgröße als direktes Maß für die gemessene Geschwindigkeit / Drehzahl, Beisp.: Schnittstelle nach RS232 / RS485,
digitale Schnittstelle zur Ausgabe der gemessenen Länge,
digitale Schnittstelle zur Eingabe von Systemparametern,
digitale Schnittstelle zur Ansteuerung eines D/A-Wandlers zur analogen Geschwindigkeitsausgabe,
Integration eines Zähler für die Längenmessung,
Erzeugung eines CUT-Signals zum Zuschneiden einer voreingestellten Länge,
Realisierung einer Richtungserkennung (Vor- und Rückwärtsrichtung),
Kombination mehrerer Laufzeitkorrelatoren 6 zur vektoriellen Geschwindigkeits- / Wegmessung,
Alarmausgänge zur Signalisierung von Grenzwertüberschreitungen,
zusätzliche Binäreingänge zur Anfang- / Endesignalisierung bei der Längenmessung.

Zur Längenmessung beispielsweise von Endlosmaterial in Form von Bahnen, Fäden od.dgl. mit insbesondere empfindlicher Oberfläche ist der Einsatz der Einrichtung besonders geeignet, da sie eine berührungslose Arbeitsweise garantiert. Eine nachteilige Beeinträchtigung der Oberflächenbeschaffenheit und somit der Qualität des Materials wird vermieden.

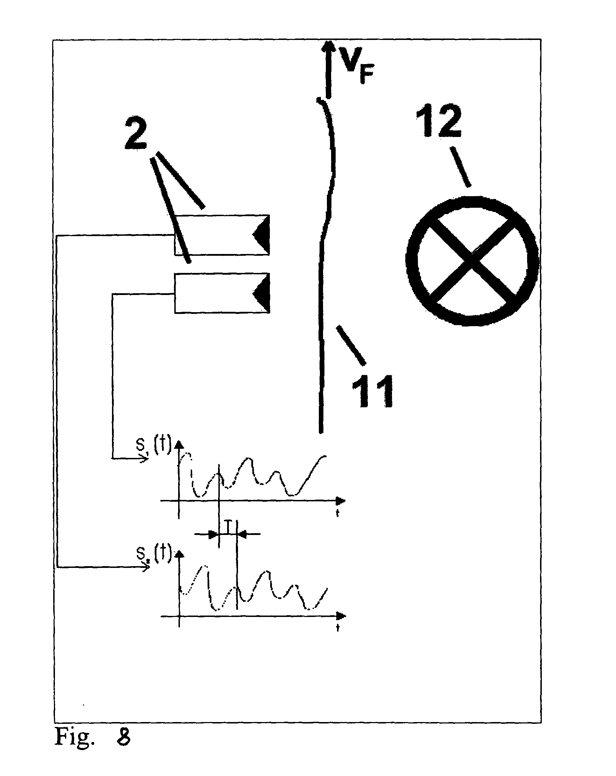

Wie in Fig. 8 dargestellt, sind hierbei zwei berührungslos arbeitende (im folgenden als konjugiert bezeichnete), optische, in einem Abstand L (Flächenschwerpunkte) voneinander in Bewegungsrichtung eines Endlosmaterials 11 angeordnete Sensoren 2 einer Sensoreinheit gegenüber von einer Belichtungsquelle 12 vorgesehen, wobei das Endlosmaterial 11 zwischen der Sensoreinheit und der Belichtungsquelle 12 hindurch verläuft. Die beiden konjugierten Sensoren 2 liefern stochastische Signale $s_1(t)$ und $s_2(t)$, die die Oberflächenstruktur des Endlosmaterials 11 widerspiegeln (dementsprechend hat die Art des Materials des zu überwachenden Objekts wesentlichen Einfluß auf die Auswahl der Sensoren 2). Diese werden in dem Laufzeitkorrelator 6 weiter verarbeitet.

Der Laufzeitkorrelator 6 als Signalverarbeiter hat die Aufgabe, die zeitliche Verschiebung T der Eingangssignale zu ermitteln. Durch Integration über die so bestimmte Geschwindigkeit $v_F$ kann die Materiallänge bestimmt werden. Wird die Sollänge erreicht, so wird der Fördervorgang gestoppt bzw. das Material durchtrennt.

In einer nicht gezeigten Ausführungsform sind zwei Paare konjugierter Sensoren vorgesehen, wobei die Verbindungsachsen einen bekannten Winkel, zweckmäßigerweise 90°, einschließen. Mit den beiden Sensorpaaren lassen sich insbesondere gleichzeitig Geschwindigkeitskomponenten in zwei Bewegungsrichtungen erfassen, so daß die Geschwindigkeit vektoriell in zwei Dimensionen ermittelbar ist. Statt zweier Sensorpaare können auch drei einzelne Sensoren vorgesehen sein, wobei jeweils zwei zueinander konjugiert sind.

Entsprechend kann die Einrichtung als "intelligente" Lichtschranke verwendet werden, die erkennt, aus welcher Richtung ein hiervon erfaßtes Objekt kommt, wie schnell es sich bewegt und wie lang es ist.

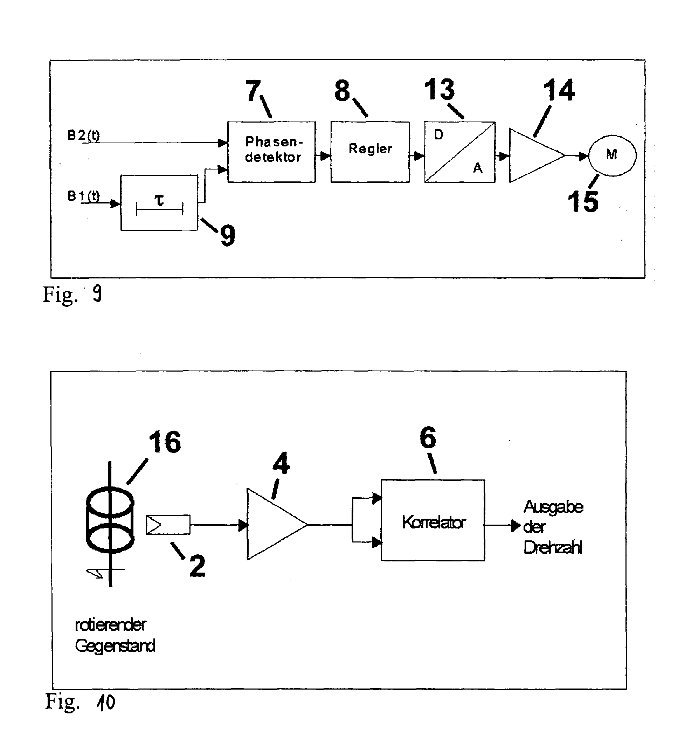

Durch die besondere Struktur eignet sich der Laufzeitkorrelator 6 bei nur geringfügigen Veränderungen gegenüber der Normalkonfiguration als Geschwindigkeitsregler bzw. als Drehzahlregler, wie aus Fig. 9 ersichtlich ist. Hierzu wird die Modellaufzeit auf einen festen Wert eingestellt, der über

$$\tau = \frac{L}{v_{soll}}$$

in einem festen Zusammenhang mit der Sollgeschwindigkeit (-drehzahl) steht. Mit Hilfe des Phasendetektors 7 wird im Falle einer Regelabweichung ein Laufzeitunterschied zwischen der Signallaufzeit und der Modellaufzeit festgestellt und der nachgeschaltete Regler 8 so angesteuert, daß die Geschwindigkeit korrigiert wird. Hierbei werden vorzugsweise die aus den analogen Funktionen $s_1(t)$ und $s_2(t)$ gewonnenen binären Funktionen $B_1(t)$ und $B_2(t)$ verwendet. Um dies zu ermöglichen, wird aus dem digitalen Ausgangssignal des Reglers 8 unter Verwendung eines D/A-Wandlers 13 ein Signal zur Ansteuerung einer Motorelektronik 14 eines Motors 15 erzeugt.

Der Laufzeitkorrelator 6 kann auch ohne weiteres zur Drehzahlmessung verwendet werden, wie aus Fig. 10 ersichtlich ist. Hierzu wird lediglich ein Meßwertaufnehmer, etwa ein optischer Detektor, benötigt, der die Oberfläche eines rotierenden Gegenstands 16 abtastet und somit ein periodisches Signal erzeugt. Das verstärkte und digitalisierte Meßsignal wird auf beide Eingänge des Laufzeitkorrelators 6 gegeben.

Bei richtiger Wahl der Systemparameter stellt sich der Laufzeitkorrelator 6 auf die Laufzeit T, die hier der Periodendauer des Eingangssignals entspricht, ein. $T = \frac{1}{N}$ mit N: Drehzahl in $s^{-1}$

$$f_{aus} \approx \frac{1}{T} \Rightarrow f_{aus} \approx N$$

Der Laufzeitkorrelator 6 erzeugt somit ein Ausgangssignal, dessen Frequenz sich proportional zur Drehzahl verhält.

Je nach Beschaffenheit der Oberfläche des Objekts, dessen Geschwindigkeit gemessen werden soll, können unterschiedliche Sensoren, z.B. optische Sensoren, Ultraschallsensoren, Mikrowellensensoren etc. verwendet werden. In strömenden Medien zum Beispiel kann das vorstehend beschriebene Korrelationsverfahren vorteilhaft zur mehrdimensionalen Utraschall-Geschwindigkeitsmessung eingesetzt werden, wobei das Laufzeitverfahren als auch das Phasenvergleichsverfahren realisiert werden kann.

**Patentansprüche**

1. Einrichtung zur Geschwindigkeitsmessung mit zwei in einem vorbestimmten Abstand (L) in einer Bewegungsrichtung eines Objektes zueinander und zur Oberfläche (1) des Objektes beabstandet angeordneten Sensoren (2), die Signale an eine Auswerteeinrichtung mit zwei Eingangskanälen abgeben, wobei die Auswerteeinrichtung ein die an seinen Eingangskanälen auftretenden Signale digitalisierender Laufzeitkorrelator (6) ist, der einen geschlossenen Regelkreis zur Bestimmung der zeitlichen Verschiebung (T) der von den Sensoren (2) abgegebenen Signale bildet, wobei der Regelkreis einen Phasendetektor (7) zum Vergleich der zeitlichen Verschiebung von Eingangsignalen, einen Regler (8) und einen Verstellkreis für die vom Regler (8) zu regelnde Regelgröße aufweist, wobei der Laufzeitkorrelator (6) ein Schieberegister mit konstanter Länge und variabler Taktfrequenz aufweist, **dadurch gekennzeichnet, daß** durch den Phasendetektor (7) ein Phasenvergleich der Augenblickswerte der digitalisierten Signale der beiden Sensoren (2), von denen eines vom Regler (8) verzögert wird, vornehmbar ist, wobei die Taktfrequenz des Schieberegisters durch den Regler (8) entsprechend der Verzögerung, aus der sich die Geschwindigkeit ergibt, einstellbar.

2. Einrichtung nach Anspruch 1, **dadurch gekennzeichnet, daß** der Laufzeitkorrelator (6) als konfigurierbarer FPGA realisiert ist.

3. Einrichtung nach Anspruch 1 oder 2, **dadurch gekennzeichnet, daß** durch den Regler (8) eine als Regelgröße dienende Modellaufzeit derart regelbar ist, daß sie gleich der Signallaufzeit der Signale der Eingangskanäle ist.

4. Einrichtung nach einem der Ansprüche 1 bis 3, **dadurch gekennzeichnet, daß** der Laufzeitkorrelator (6) eine elektronische Schaltung umfaßt, die die Vorzeichen des Differenzenquotienten der von den Sensoren (2) gelieferten, analogen Eingangssignale binär codiert.

5. Einrichtung nach einem der Ansprüche 1 bis 4, **dadurch gekennzeichnet, daß** jeder Eingangskanal des Laufzeitkorrelators (6) mindestens einen Sample- and-Hold-Schaltkreis zur Erzeugung von Differenzenquotienten der analogen Signale der Eingangskanäle aufweist.

6. Einrichtung nach einem der Ansprüche 1 bis 5, **dadurch gekennzeichnet, daß** der Laufzeitkorrelator (6) einen binären Ausgang für ein frequenzkodiertes Signal besitzt.

7. Einrichtung nach Anspruch 6, **dadurch gekennzeichnet, daß** der binäre Ausgang an einen nachgeschalteten Zähler für jeden Flankenwechsel des Ausgangssignals angeschlossen ist.

8. Einrichtung nach einem der Ansprüche 1 bis 7, **dadurch gekennzeichnet, daß** der Verstellkreis (9) ein Schieberegister umfaßt.

9. Einrichtung nach Anspruch 8, **dadurch gekennzeichnet, daß** die Anzahl der Schieberegisterstufen bei konstanter Taktfrequenz veränderbar ist.

10. Einrichtung nach Anspruch 8, **dadurch gekennzeichnet, daß** die Taktfrequenz bei konstanter Schieberegisterlänge veränderbar ist.

11. Einrichtung nach Anspruch 10, **dadurch gekennzeichnet, daß** eine Einrichtung zur Frequenzerzeugung nach dem DDFS (direct digital frequency synthesis) — Verfahren vorgesehen ist.

12. Laufzeitkorrelator für Meßeinrichtungen mit wenigstens zwei Eingangskanälen einen geschlossenen sowie eine Einrichtung (7) zum Vergleich der zeitlichen Verschiebung von Eingangssignalen, einen Regler (8) und einen Verstellkreis (9) für die vom Regler (8) zu regelnde Regelgröße aufweisenden, digitale Signale verarbeitenden Regelkreis zur Bestimmung der zeitlichen Verschiebung (T) der Eingangssignale bildet und einen konfigurierbaren FPGA umfaßt.

13. Laufzeitkorrelator nach Anspruch 12, **dadurch gekennzeichnet, daß** eine Digitalisierungseinrichtung für Eingangssignale in jedem Eingangskanal vorgesehen ist.

14. Laufzeitkorrelator nach Anspruch 12 oder 13, **dadurch gekennzeichnet, daß** durch den Regler (8) eine als Regelgröße dienende Modellaufzeit derart regelbar ist, daß sie gleich der Signallaufzeit der Signale der Eingangskanäle ist.

15. Laufzeitkorrelator nach einem der Ansprüche 12 bis 14, **dadurch gekennzeichnet, daß** die Einrichtung zum Bestimmen der zeitlichen Verschiebung von Eingangssignalen einen Phasendetektor (7) umfaßt, dessen Ausgangssignal ein Maß für die Regelabweichung zur Ansteuerung des nachgeschalteten Reglers (8) ist.

16. Laufzeitkorrelator nach einem der Ansprüche 12 bis 15, **dadurch gekennzeichnet, daß** eine elektronische Schaltung vorgesehen ist, die die Vorzeichen des Differenzenquotienten der analogen Eingangssignale binär codiert.

17. Laufzeitkorrelator nach einem der Ansprüche 12 bis 16, **dadurch gekennzeichnet, daß** jeder Eingangskanal mindestens einen Sample-and-Hold-Schaltkreis zur Erzeugung von Differenzenquotienten von analogen Signalen der Eingangskanäle aufweist.

18. Laufzeitkorrelator nach einem der Ansprüche 12 bis 17, **dadurch gekennzeichnet, daß** ein binärer Ausgang für ein frequenzkodiertes Signal vorgesehen ist.

19. Laufzeitkorrelator nach Anspruch 18, **dadurch gekennzeichnet, daß** der binäre Ausgang an einen nachgeschalteten Zähler für jeden Flankenwechsel des Ausgangssignals angeschlossen ist.

20. Laufzeitkorrelator nach einem der Ansprüche 12 bis 19, **dadurch gekennzeichnet, daß** der Verstellkreis (9) ein Schieberegister umfaßt.

21. Laufzeitkorrelator nach Anspruch 20, **dadurch gekennzeichnet, daß** die Anzahl der Schieberegisterstufen bei konstanter Taktfrequenz veränderbar ist.

22. Laufzeitkorrelator nach Anspruch 20, **dadurch gekennzeichnet, daß** die Taktfrequenz bei konstanter Schieberegisterlänge veränderbar ist.

23. Laufzeitkorrelator nach Anspruch 22, **dadurch gekennzeichnet, daß** eine Einrichtung zur Frequenzerzeugung nach dem DDFS (direct digital frequency synthesis) -Verfahren vorgesehen ist.

24. Einrichtung zur Messung der Länge eines sich in einer Transportrichtung bewegenden Objekts oder Endlosmaterials, **dadurch gekennzeichnet, daß** eine Einrichtung zur Geschwindigkeitsmessung des Objekts nach einem der Ansprüche 1 bis 11 und eine Einrichtung zum Integrieren von deren Ausgangssignal vorgesehen sind.

25. Einrichtung zum Regeln der Geschwindigkeit bzw. Drehzahl eines Objektes, **dadurch gekennzeichnet, daß** ein Laufzeitkorrelator (6) nach einem der Ansprüche 12 bis 23 vorgesehen ist, wobei der Verstellkreis (9) auf einen festen Wert entsprechend der Sollgeschwindigkeit bzw. —drehzahl eingestellt ist und der Regler (8) bei einer Abweichung hiervon ein Regelsignal erzeugt.

26. Einrichtung zur Drehzahlmessung eines rotierenden Objekts, **dadurch gekennzeichnet, daß** ein Laufzeitkorrelator (6) nach einem der Ansprüche 12 bis 23 vorgesehen ist, wobei ein Sensor (2) zum Abtasten des rotierenden Objekts vorgesehen und mit beiden Eingangskanälen des Laufzeitkorrelators (6) verbunden ist.

Fig.1

Fig.2

**7**

**8**

S2(t)

**Modellaufzeit**

S1(t)

$\tau$

**Laufzeitvergleich**

**Regler**

**9**

Fig.3

S (t)

**positiver
Differenzquotient**

**negativer
Differenzquotient**

B (t)

1

0

Fig.4

**Fig. 5**

**Fig. 6**: Laufzeitunterschied T zwischen zwei Binärsignalen

**Fig. 7**: Änderung der Stellgröße

Fig. 8

**7** **8** **13** **14**

B 2 (t) ──────────►┌──────────┐    ┌────────┐    ┌──────┐         ┌────┐
                   │ Phasen-  │───►│ Regler │───►│ D    │────►│ ►  │───► (M)
B 1 (t) ──►┌───┐──►│ detektor │    │        │    │    A │         └────┘
           │ τ │   └──────────┘    └────────┘    └──────┘                **15**
           └───┘
                **9**

Fig. 9

**16** **4** **6**

rotierender Gegenstand

┌───┐         ┌───────────┐
│ ► │────►│    │────►│ Korrelator │───► Ausgabe
└───┘         └───────────┘        der
  **2**                               Drehzahl

Fig. 10

14